# EUROPÄISCHE PATENTSCHRIFT

(11) **EP 0 966 624 B1**
(45) Veröffentlichungstag und Bekanntmachung des Hinweises auf die Patenterteilung: **27.06.2001**
(21) Anmeldenummer: 98913636.1
(22) Anmeldetag: 04.03.1998
(51) Int. Cl.: F16G 13/16, H02G 3/04

(54) **FALTBARES SCHUTZELEMENT FÜR LEITUNGEN**
COLLAPSIBLE LINE PROTECTION ELEMENT
ELEMENT DE PROTECTION PLIANT POUR LIGNES

(30) Priorität: 13.03.1997 DE 19710489
(43) Veröffentlichungstag der Anmeldung: 29.12.1999
(73) Patentinhaber: Kabelschlepp Gesellschaft mit beschränkter Haftung, 57074 Siegen (DE)
(72) Erfinder: HEIDRICH, Klaus, D-57250 Netphen (DE); KLEIN, Lorenz, D-57250 Netphen (DE); WEBER, Willibald, D-57250 Netphen (DE); WEHLER, Herbert, D-57290 Neunkirchen (DE)
(74) Vertreter: Kahlhöfer, Hermann, Dipl.-Phys.
(86) Internationale Anmeldenummer: EP9801214
(87) Internationale Veröffentlichungsnummer: WO9840645

(56) Entgegenhaltungen:
- EP-A- 0 412 233
- EP-A- 0 415 050
- EP-A- 0 544 027
- WO-A-80/02476
- WO-A-90/00824
- DD-A- 265 449
- FR-A- 2 448 240
- US-A- 2 975 807
- US-A- 3 473 769
- US-A- 4 392 344
- US-A- 4 953 735

## Beschreibung

Die vorliegende Erfindung betrifft ein faltbares Schutzelement für Leitungen, welches zusammen mit anderen Schutzelementen eine schützende Führung für Kabel, Schläuche und andere Energieführungsleitungen bilden kann. Zum Schutz vor mechanischen Einwirkungen und zur Sicherstellung ganz bestimmter Bewegungsbahnen für Energieführungsleitungen, die insbesondere nicht zu stark gekrümmt oder gar geknickt werden dürfen, werden bevorzugt sogenannte Energieführungsketten oder Energieführungsschläuche eingesetzt.

Ein Beispiel für eine solche Energieführungskette ist in der EP 0 415 050 B1 beschrieben, in deren Einleitung auch weitere Hinweise auf den Stand der Technik erhalten sind. Aus der DD 265 449 A1 ist außerdem ein sogenanntes Kabel- und Schlauchschlepp bekannt, welches die gleiche Funktion erfüllt, jedoch nicht aus einzelnen Kettengliedern zusammengesetzt, sondern als geschlossenes Ganzes extrudiert und anschließend bearbeitet, insbesondere geschlitzt ist.

Ein ähnlich hergestelltes System ist auch in der EP 0 544 027 A1 beschrieben.

Weiterhin ist aus der US 3,473,769 bekannt, ein flächiges Gebilde zu extrudieren, welches durch Ausstanzen einzelner Teile und Zusammenfalten seitlicher Stege zu einem Schutzsystem für Leitungen geformt werden kann.

Schließlich ist aus der EP 0 424 404 B1 ein Energieführungsträger bekannt, der als Baueinheit mit Leitungen und Anschlußadaptern an den Enden ausgebildet ist.

Bei den bekannten Schutzsystemen für Leitungen sind zwei Wege erkennbar, wie unterschiedliche Anforderungen erfüllt werden können. Ein Weg geht dahin, aus zwei oder vorzugsweise noch mehr Teilen zusammengesetzte Kettenglieder herzustellen, die dann gemeinsam mit anderen Kettengliedern eine Energieführungskette formen, die je nach Anwendungsfall mehr oder weniger kompliziert aufgebaut ist. Der andere Weg geht dahin, einstückige Energieführungssysteme auszubilden, indem langgestreckte Bauteile extrudiert und danach in mehreren Bearbeitungsschritten durch Stanzen, Schneiden, Biegen usw. Energieführungssysteme geschaffen werden. Dabei haben extrudierte Energieführungssysteme grundsätzlich den Nachteil, daß Querschnittsveränderungen in Extrusionsrichtung (außer der vollständigen nachträglichen Entfernung von Material) nicht möglich sind, so daß sich viele wünschenswerte mechanische Einzelheiten, insbesondere in Extrusionsrichtung stabile Verbindungen auf diese Weise nicht herstellen lassen.

Ausgehend von dem genannten Stand der Technik ist es Aufgabe der vorliegenden Erfindung, ein faltbares Schutzelement für Leitungen zu schaffen, welches kostengünstig herstellbar ist, aber weitgehend in allen Dimensionen frei gestaltbar ist. Insbesondere soll sich das Schutzelement auch als Teil einer einstückigen Schutzelementreihe ausbilden lassen, welche in ihrer Endform die Funktion der nach dem Stand der Technik beschriebenen Energieführungsketten hat.

Ebenfalls Aufgabe der Erfindung ist die Schaffung eines Verfahrens zur Herstellung einer einstückigen Reihe aus mehreren Schutzelementen bei weitgehender Freiheit in der Formgebung und kostengünstiger Herstellung. Diese Aufgabe wird durch ein faltbares Schutzelement für Leitungen gemäß dem Anspruch 1 gelöst. Mehrere solche Schutzelemente können zu einer einstückigen Schutzelementreihe nach dem Anspruch 11 geformt werden, wobei ein entsprechendes Verfahren im Anspruch 21 angegeben wird.

Vorteilhafte Ausgestaltungen sind in den jeweils abhängigen Ansprüchen enthalten.

Ein erfindungsgemäßes faltbares Schutzelement wird aus Kunststoff im wesentlichen in einer ebenen flächigen Konfiguration einteilig gespritzt oder gegossen und ist aus untereinander durch verbiegbare Brücken verbundenen Segmenten aufgebaut. Dabei weist das Schutzelement ein Bodensegment mit einer Unterseite und einer Oberseite und mindestens ein Wandsegment auf, welche durch Biegen und/oder Falten Richtung Oberseite des Bodensegmentes und mechanischen Schließen eines Schließmechanismus' zu einem geschlossenen Kanalabschnitt geformt werden können. Das Schutzelement ist dabei entweder mit anderen gleichartigen Schutzelementen verbunden oder so ausgebildet, daß es mit anderen gleichartigen Schutzelementen verbindbar ist, so daß die Kanalabschnitte in einer Längsrichtung einen Kanal für Leitungen bilden, insbesondere für beweglich verlegte Leitungen.

Die Herstellungsmethode durch Kunststoffspritzen oder -gießen erlaubt eine in allen Richtungen komplexe Formgebung, wie sie von Kettengliedern bei Energieführungsketten bekannt ist. So kann insbesondere ein Schließmechanismus ausgebildet werden, der auch bei relativ weichem. Kunststoffmaterial in axialer Richtung belastbar ist, was bei der Verwendung extrudierter Profile grundsätzlich nicht möglich ist. Dadurch, daß das Schutzelement in einer etwa ebenen, flächigen Konfiguration gespritzt bzw. gegossen wird, lassen sich fast beliebige Materialprofile aller Wände der Kanalabschnitte herstellen, insbesondere auch bei den Wandsegmenten, was bei U-förmig hergestellten Kettengliedern beispielsweise nicht möglich ist.

Im einfachsten Fall kann das Schutzelement aus einem Bodensegment und einem daran an einer Seite angeformten Wandsegment bestehen, welches beim Zusammenbau zur Oberseite geknickt, zu einem Bogen geformt und an der gegenüberliegenden Seite des Bodensegmentes mittels eines Schließmechanismus' eingehakt oder eingerastet wird. Ein so entstehender Kanalabschnitt mit etwa halbkreisförmigem Querschnitt bildet die einfachste Form eines Schutzelementes für beweglich verlegte Leitungen.

Um einen etwa dreieckigen Querschnitt des Schutzelementes zu erreichen, kann dieses aus einem Bodensegment und zwei Wandsegmenten bestehen, die entweder an unterschiedlichen Seiten des Bodensegmentes angeformt und untereinander durch einen Schließmechanismus verbindbar sind oder die beide in Folge an einer Seite des Bodensegmentes angeformt sind und durch zweimaliges Falten in die gewünschte Form gebracht werden.

Um ein im Querschnitt etwa rechteckiges Schutzelement zu erhalten, wie es für beweglich verlegte Leitungen bevorzugt wird, muß das Schutzelement ein Bodensegment, mindestens zwei Wandsegmente und ein Deckelsegment aufweisen. Diese können in unterschiedlicher Verteilung an dem Bodensegment angeformt sein, wie anhand der Zeichnung noch näher erläutert wird.

Es sei darauf hingewiesen, daß die verbiegbaren Brücken zwischen den einzelnen Segmenten nicht für ein vielfaches Hin- und Herbiegen ausgelegt sein müssen, sondern lediglich ein einmaliges Falten in eine Richtung schadlos überstehen müssen. Es ist daher möglich, durch geeignete Ausformung der Brücken sehr stabile Schutzelemente herzustellen, die in ihren mechanischen Eigenschaften direkt U-förmig hergestellten Kettengliedern durchaus ähnlich sind, sofern letztlich die Stabilität des gefalteten Verbundes durch den Schließmechanismus sichergestellt wird. Dieser ist bevorzugt eine Vorrichtung zum Einrasten, Verhaken und/oder Verriegeln, wobei er insbesondere eine gegen unbeabsichtigtes Lösen unter Belastung gesicherte Vorrichtung herstellen soll. Ob der Schließmechanismus nach dem Schließen manuell wieder lösbar ausgelegt sein sollte, hängt vom jeweils vorgesehenen Anwendungsfall ab. In vielen Fällen wird eine nicht wieder lösbare Einrastverbindung ausreichen, da die Erfindung insbesondere für besonders preisgünstige Energieführungssysteme geeignet ist, bei denen eine Reparatur im allgemeinen nicht in Betracht kommt, sondern beschädigte Systeme lediglich komplett ausgetauscht werden. Grundsätzlich läßt die Erfindung aber auch alle Arten von bekannten lösbaren Verbindungen als Schließmechanismus zu, wobei die Art der Herstellung in einer ebenen, flächigen Konfiguration sogar zusätzliche Freiheitsgrade in der Gestaltung des Schließmechanismus' zuläßt.

Um eine exakte Querschnittsform der Kanalabschnitte sicherzustellen, können die einzelnen Segmente des Schutzelementes mit Formteilen, insbesondere Stegen, Vorsprüngen, Ausnehmungen und dergleichen, versehen sein, durch die das formgenaue Zusammenfalten sichergestellt wird. Solche Formteile können zusätzlich die Stabilität der einzelnen Segmente verbessern, indem sie Verstrebungen bilden.

Für Energieführungssysteme ist es auch bekannt, sogenannte Trennstege vorzugsehen, welche unterschiedliche Leitungen innerhalb des Schutzelementes voneinander trennen, was einen definierten und schonenden Verlauf der Leitungen im Inneren des Schutzsystems ermöglicht. Solche Trennstege, die den zu formenden Kanalabschnitt in zwei oder mehr Teilquerschnittsflächen unterteilen, können gemäß der vorliegenden Erfindung an mindestens eines der Segmente angeformt sein. Dabei kann ein solcher Trennsteg entweder so an eines der Segmente des Schutzelementes angeformt sein, daß er bereits aus der Ebene der flächigen Konfiguration bei der Herstellung etwa senkrecht heraussteht, oder er kann so an eines der Segmente angeformt sein, daß er sich später in die gewünschte Lage falten läßt.

Bei einer besonders bevorzugten Ausführungsform des erfindungsgemäßen Schutzelementes sind die die Segmente untereinander verbindenden Brücken zumindest teilweise Kniegelenke, d.h. Gelenke, die aufgrund ihrer Bauform in zwei unterschiedlichen Stellungen stabil stehenbleiben können. Solche Gelenke sind beispielsweise aus dem Stand der Technik bei Kunststoffverschlüssen für Flaschen bekannt. Insbesondere bei der Anwendung zur Befestigung von Deckelsegmenten an erfindungsgemäßen Schutzelementen können sich erhebliche Vorteile ergeben, insbesondere bei der Montage des Systems.

Wenn aus den erfindungsgemäßen Schutzelementen übliche Energieführungsketten hergestellt werden sollen, so müssen diese Schutzelemente gemäß einer Ausführungsform der Erfindung Einrichtungen zum Anlenken von benachbarten Schutzelementen aufweisen, insbesondere Zapfen und Führungslöcher oder dergleichen. Grundsätzlich kommen hierfür sehr viele aus dem Stand der Technik bekannte Ausführungsformen von Gelenken in Betracht, insbesondere aber solche, bei denen die einzelnen Kettenglieder in ihrer Endform miteinander verrastet werden können. Allerdings bietet die Erfindung auch die Möglichkeit, Schutzelemente noch in ihrer flächigen Konfiguration vor dem Falten zusammenzusetzen und dann gemeinsam zu falten, wodurch wiederum ein zusätzlicher Freiheitsgrad bei der Gestaltung der Gelenkverbindungen geschaffen wird.

Eine andere Ausführungsform der Erfindung sieht vor, daß das Schutzelement Führungsöffnungen zur Aufnahme mindestens eines Führungsbandes oder Führungsfadens zum Aneinanderreihen vieler Schutzelemente aufweist. Wie anhand der Zeichnung näher erläutert wird, lassen sich so Schutzelemente auf ein Führungsband oder auf Führungsfäden auffädeln, wodurch ein einfaches Schutzsystem gebildet wird.

Besonders wichtig ist in vielen Fällen bei Schutzelementen für beweglich verlegte Leitungen, daß bestimmte vorgegebene Krümmungsradien der Leitungen nicht unterschritten werden. In einer bevorzugten Ausführungsform weist daher ein erfindungsgemäßes Schutzelement Mittel zur Begrenzung des Winkels auf, um den es in Längsrichtung gegenüber einem benachbarten Schutzelement abgewinkelt werden kann. Solche sogenannten Krümmungsradiusbegrenzer sind in vielfältigen Formen aus dem Stand der Technik bekannt. Es kann sich um eine spezielle Formgebung der Gelenke zu benachbarten Schutzelementen handeln oder um Stege, die bei einem bestimmten Winkel mit entsprechenden Stegen von benachbarten Schutzelementen zusammenstoßen und eine weitere Biegung verhindern.

Einer der wesentlichsten Aspekte der vorliegenden Erfindung und ein bevorzugtes Ausführungsbeispiel ist, daß mehrere Schutzelemente einstückig in Form einer Schutzelementreihe hergestellt sind, wobei insbesondere die Bodensegmente aneinanderhängen. Für kleine und vor allem kurze Leitungsführungssysteme, beispielsweise mit einer Länge von 20 bis 150 cm, kann es sehr kostengünstig sein, das komplette System mit einem einzigen Herstellungsschritt herzustellen. Gerade bei Ketten aus sehr kleinen Kettengliedern ist der Montageaufwand erheblich und es sind komplizierte sehr präzise Maschinen erforderlich, um solche Ketten aus mehreren Teilen zusammenzubauen. Hier bietet die einstückige Herstellung entscheidende Vorteile bei den Kosten, aber auch bezüglich der technischen Anwendungsmöglichkeiten, wie im folgenden erläutert wird.

Bei einer erfindungsgemäßen einstücken Schutzelementreihe können bevorzugt die Bodensegmente zusammen eine durchgehende, biegsame Bodenfläche gleichmäßiger Materialdicke bilden, wodurch die Vorteile von extrudierten Energieführungssystemen mit denen von Energieführungsketten kombiniert werden können. Für einige Anwendungsfälle kann es jedoch auch vorteilhaft sein, daß die Bodensegmente einer einstückigen Schutzelementreihe durch elastische Biegebereiche miteinander verbunden sind, insbesondere durch Abschnitte mit geringerer Materialdicke und/oder geringerer Breite als der der Bodensegmente. Diese biegsamen Abschnitte übernehmen dann die Funktion von Gelenken, haben jedoch, wie überhaupt die einstückige Anordnung, den Vorteil, daß keine Teile aneinanderreiben, so daß kein Abrieb entsteht und auch keine sich durch Verschleiß verändernden Toleranzen auftreten. Dies kann für kleine Präzisionssysteme und die Anwendung in Reinräumen, in denen Abrieb unerwünscht ist, von großem Vorteil sein.

Bei erfindungsgemäßen einstückigen Schutzelementreihen können die aus dem Stand der Technik bekannten Mittel zur Begrenzung des Krümmungsradius' eingesetzt werden. Insbesondere können an der Unterseite an jedem Bodensegment Stege angeordnet sein, die mit benachbarten Stegen so zusammenwirken, daß die Schutzelementreihe nur bis zu einem vorgegebenen Mindestkrümmungsradius zur Unterseite hin gebogen werden kann. Diese Stege können in Längsrichtung verlaufen und entsprechend dem gewünschten Winkel zum Nachbarelement abgeschrägte Stirnseiten aufweisen. Eine andere Alternative ist, daß die Stege quer zur Längsrichtung verlaufen und entsprechend abgeschrägte Seitenflächen haben.

Bei Energieführungssystemen mit einem zu einer Seite hin begrenzten minimalen Krümmungsradius ist es häufig gewünscht, daß diese Systeme sich nach der Oberseite hin nur maximal bis zu einer geraden Linie bewegen lassen. Auf diese Weise können Energieführungssysteme selbst als tragende Struktur für Leitungen dienen, wobei eine möglichst große sogenannte freitragende Länge erwünscht ist. Da das Gewicht der zu führenden Leitungen und des Führungssystemes selbst bei größeren freitragenden Längen zu einer Durchbiegung führt, ist es sogar manchmal erwünscht, das Energieführungssystem so zu konstruieren, daß es ohne Kraftaufwand nicht ganz gerade gestreckt werden kann, so daß sich bei großen freitragenden Längen erst durch das Gewicht des Systems eine gerade Form ergibt, wobei sich eine gewisse elastische Verformung bildet. Man nennt Energieführungssysteme die sich nur unter Kraftaufwand in eine gerade Form bringen lassen auch "vorgespannte" Systeme. Dies läßt sich mit extrudierten Energieführungssystemen nicht auf einfache Weise erreichen, da hierzu gekrümmte Profile extrudiert werden müßten, was definiert reproduzierbar nur schwer möglich ist. Durch nachträgliches Schlitzen oder Stanzen kann niemals die für eine Vorspannung erforderliche Form hergestellt werden.

Demgegenüber ist es bei der vorliegenden Erfindung möglich, einstückige Schutzelementreihen auch mit einer beliebigen Vorspannung herzustellen. Dazu ist lediglich erforderlich, daß die Wand und/oder Deckelsegmente nicht alle auf einer Seite der Bodensegmente anformt sind, sondern abwechselnd auf beiden Seiten. Auf diese Weise ist genug Platz vorhanden, daß die Wandsegmente, insbesondere aber die Deckelsegmente in ihrer Gesamtlänge größer als die Gesamtlänge der Bodensegmente hergestellt werden können, wodurch sich gerade die Vorspannung ergibt. Diese Anordnung hat außerdem den Vorteil, daß Trennstege an den Wand- und/oder Deckelsegmenten angeformt werden können.

Ein ganz besonderer Vorteil einer einstückig hergestellten Schutzelementreihe besteht auch darin, daß gemäß einem bevorzugten Ausführungsbeispiel der vorliegenden Erfindung an mindestens einem Ende ein Endstück angeformt sein kann, welches zur Befestigung und/oder zur Aufnahme von Anschlußmitteln für Leitungen dient. Bei aus einzelnen Kettengliedern hergestellten Ketten ist es in vielen Fällen erforderlich, besondere Endstücke herzustellen, was einen entsprechenden Aufwand bei Werkzeugen und Logistik erfordert. Angeformte Endglieder für Energieführungssysteme, die in großen Stückzahlen benötigt werden, sind daher besonders günstig. Dieser Effekt wird noch dadurch verstärkt, daß die Endstücke nicht nur Löcher oder bestimmte Formen zur Befestigung an anderen Bauteilen aufweisen, sondern direkt als Aufnahme für Anschlußmittel von Leitungen ausgeformt sind. Insbesondere ist es möglich das Endstück mit vorgeformten Aufnahmen für elektrische und/oder pneumatische und/oder hydraulische Steckverbindungen auszustatten, wie anhand der Zeichnung beispielhaft näher erläutert wird. Eine solche einstückige Schutzelementreihe mit vorgeformten Endstücken läßt sich sehr leicht mit Leitungen zu einem modularen Komplettsystem zusammenbauen, insbesondere in einer Großserienfertigung.

Eine weitere erfindungsgemäße Möglichkeit zur Herstellung einer einstückigen Schutzelementreihe besteht darin, daß Schutzelemente an mindestens ein Band oder an zwei oder mehr Fäden in vorgegebenen Abständen angespritzt oder angegossen werden. Dabei ist es auch möglich jeweils mehrere Schutzelemente gleichzeitig an ein Band oder an Fäden anzugießen. Auf die Weise entsteht ein gurtähnliches System welches viele günstige Eigenschaften von extrudierten Energieführungssystemen und Energieführungsketten vereinigen kann. Insbesondere ist eine Herstellung beliebiger Längen möglich, wobei trotzdem die Einstückigkeit erhalten bleibt. Die Biegsamkeit und Belastbarkeit des Systems kann dabei durch die Wahl des Bandes bzw. der Fäden und durch die Abstände der Schutzelemente beeinflußt werden. Grundsätzlich können dabei unterschiedliche Materialien für das Band bzw. die Fäden und die Schutzelemente verwendet werden. Es ist jedoch auch möglich, beide aus dem gleichem Material herzustellen.

Ein anderes erfindungsgemäßes Verfahren, welches eine besonders bevorzugte Ausführung ist, ist die Herstellung einer einstückigen Schutzelementreihe von vorgegebener Länge in einer einzigen Gieß- oder Spritzform. Erhöhten Werkzeugkosten für diese eine Spritzform stehen erheblich geringere Kosten für Spritzmaschinen, Montage und Montagewerkzeuge gegenüber, da nur noch ein einziges Bauteil gehandhabt und gefaltet werden muß, während bei aus Kettengliedern geformten Energieführungsketten viele Bauteile gehandhabt werden müssen und bei extrudierten Systemen zahlreiche Nachbearbeitungsschritte erforderlich sind.

Dies gilt insbesondere, wenn die Endstücke bereits angeformt sind, wie bevorzugt bei der vorliegenden Erfindung vorgesehen.

Die Vorteile der Erfindung treten insbesondere zutage, wenn in größeren Stückzahlen, von z.B. mehr als 100.000 Stück pro Jahr, Schutzelementreihen mit schon eingelegten Leitungen und in Endstücke integrierten Anschlüssen hergestellt werden sollen. Erfindungsgemäß ist dies leicht durch Herstellen der Schutzelementreihe mit angeformten Endstücken in einer Form möglich, wobei anschließend die Leitungen eingelegt und deren Anschlußstecker und/oder Anschlußbuchsen in vorgeformten Aufnahmen in den Endstücken fixiert werden. Durch Falten und Schließen der Schließmechanismen der einzelnen Schutzelemente wird das System fertiggestellt.

Vorteile und bevorzugte Ausführungsbeispiele der Erfindung, auf die diese jedoch nicht beschränkt ist, werden im folgenden anhand der Zeichnung erläutert, und zwar zeigen:
- Fig. 1: eine Seitenansicht einer erfindungsgemäßen einstückigen Schutzelementreihe mit Endstücken,
- Fig. 2: einen Querschnitt durch ein einzelnes Schutzelement dieser Schutzelementreihe im ungefalteten Zustand,
- Fig. 3: eine Ansicht von oben auf ein herausgebrochenes Teilstück der Schutzelementreihe in ungefalteter Stellung,
- Fig. 4: eine schematische Explosionszeichnung des Endbereichs einer Schutzelementreihe mit Steckereinsatz und Anschlußadapter,
- Fig. 5: eine Ansicht von oben auf eine ungefaltete Schutzelementreihe mit Endstücken,
- Fig. 6: einen Querschnitt durch die Schutzelementreihe aus Fig. 5 im Bereich des vorletzten Schutzelementes,
- Fig. 7: einen Querschnitt durch ein Endstück der Schutzelementreihe aus Fig. 5,
- Fig. 8: den schematischen Aufbau eines Schutzelementes im Querschnitt in ungefalteter Stellung,
- Fig. 9, 10 und 11: die einzelnen Schritte beim Zusammenfalten des Schutzelementes aus Fig. 8 im Querschnitt,
- Fig. 12, 13 und 14: einen Schließmechanismus für Schutzelemente in geöffnetem bzw. geschlossenem Zustand,
- Fig. 15, 16 und 17: ein anderes Ausführungsbeispiel eines Schutzelementes im Querschnitt in ungefalteter, teilweise gefalteter und geschlossener Darstellung,
- Fig. 18, 19 und 20: ein weiteres Ausführungsbeispiel eines Schutzelementes im Querschnitt in gestreckter, teilweise gefalteter und geschlossener Darstellung,
- Fig. 21, 22 und 23: ein weiteres Ausführungsbeispiel eines Schutzelementes im Querschnitt in ungefalteter, teilweise gefalteter und geschlossener Darstellung,
- Fig. 24, 25 und 26: ein Beispiel für ein Kniehebelgelenk in geöffneter, halb geschlossener und geschlossener Darstellung,
- Fig. 27: ein schematisches Ausführungsbeispiel für eine Schutzelementreihe mit einem Führungsband bzw. zwei Führungsfäden und
- Fig. 28: eine Ansicht von oben auf ein einzelnes, faltbares Schutzelement in Form eines Kettengliedes.

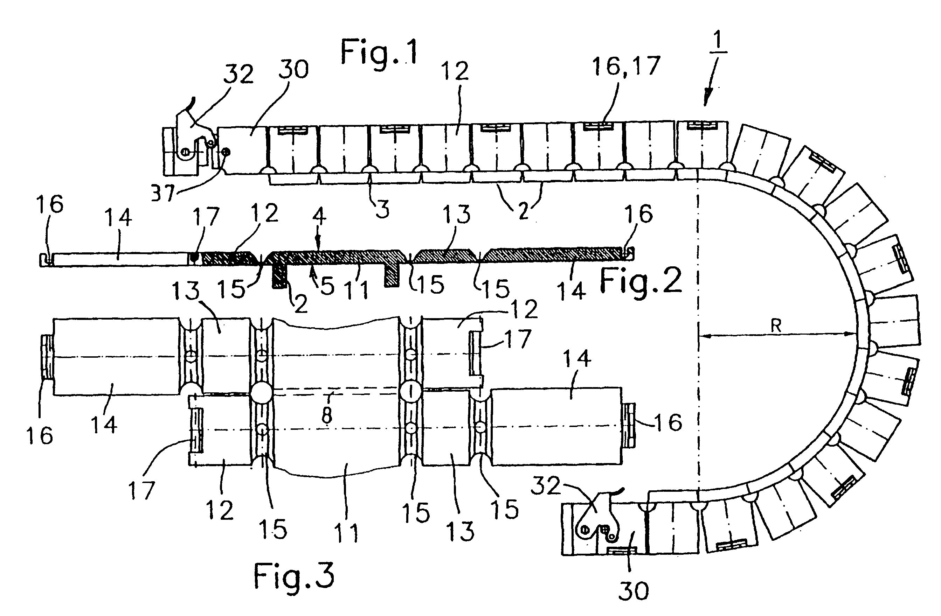

Fig. 1 zeigt in einer Seitenansicht in schematischer Darstellung eines der besonders bevorzugten Ausführungsbeispiele der vorliegenden Erfindung, nämlich eine aus einem Stück gespritzte oder gegossene Schutzelementreihe aus einstückig aneinanderhängenden Schutzelementen 1, welche Kanalabschnitte 10 bilden. Diese weisen an ihrer Unterseite Stege 2 mit abgeschrägten Stirnseiten 3 auf, welche beim Abwinkeln benachbarter Schutzelemente sicherstellen, daß die Schutzelementreihe zu ihrer Unterseite hin nicht einen minimalen Krümmungsradius R unterschreiten kann. An die Schutzelementreihe sind einstückig Endstücke 30 angeformt, welche sich beispielsweise mittels eines Verriegelungsmechanismus' 32, der in einen Verriegelungszapfen 37 eingreift an geeigneten Anschlußadaptern 36 befestigen lassen.

Wie anhand der Figuren 2 und 3 im Querschnitt bzw. in einer Ansicht von oben verdeutlicht wird, sind die einzelnen Schutzelemente der Schutzelementreihe durch Zusammenfalten eines ursprünglich in etwa ebener gestreckter Form hergestellten zusammenhängenden Kunststoffgebildes entstanden. Jedes Schutzelement 1 weist ein Bodensegment 11, zwei Wandsegmente 12, 13 und ein Deckelsegment 14 auf, welche durch verbiegbare Brücken 15 untereinander zusammenhängen. Die verbiegbaren Brücken 15 haben eine geringere Materialdicke als die übrigen Segmente und sind in ihren Begrenzungen so geformt, daß sich beim Zusammenfalten ein stabiler, im Querschnitt rechteckiger Kanal 9 für jedes Schutzelement 1 ergibt. Das Falten erfolgt zur Oberseite 4 des Bodensegmentes 11 hin, wobei ein Schließmechanismus 16, 17 das Verbinden der einander berührenden Enden eines Wandsegmentes 12 und des Deckelsegmentes 14 ermöglicht. Für den Schließmechanismus 16, 17 kommen verschiedene, aus dem Stand der Technik bei Energieführungsketten bekannte Formen in Betracht, insbesondere Haken, Einrastungen, formschlüssige Verriegelungen und insbesondere elastisch einschnappende Schnappverbindungen. In den vorliegenden Ausführungsbeispielen ist eine solche Schnappverbindung dargestellt, bei der eine gerundete Achse 17 in eine Ausbuchtung 16 einschnappt.

Bei den in der Zeichnung dargestellten Ausführungsbeispielen für Schutzelementreihen hängen die Bodensegmente 11 aneinander. Sie können dabei im einfachsten Fall eine Führungsbahn überall gleichmäßiger Materialstärke bilden, die sich relativ gleichmäßig bis zu einem minimalen Krümmungsradius krümmen läßt. Um die Gelenkigkeit einer Schutzelementreihe zu vergrößern, können jedoch zwischen den einzelnen Bodensegmenten 11 auch elastische Biegebereiche 8 vorgesehen werden, die eine dünnere Materialdicke und/oder eine geringere Materialbreite als die übrigen Bodensegmente 11 haben.

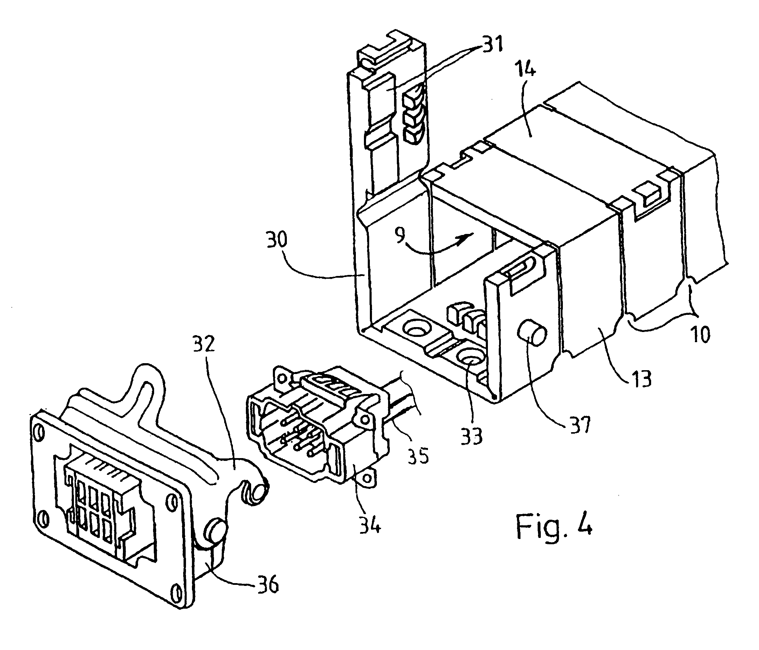

Um die Vorteile der erfindungsgemäßen Schutzelementreihen zu veranschaulichen, zeigt Fig. 4 in perspektivischer Darstellung das Ende einer Schutzelementreihe, wobei das Deckelsegment 14 des Endstückes 30 geöffnet dargestellt ist. Dieses Endstück 30 ist mit Befestigungslöchern 33 versehen, mittels welcher es an einer Struktur angeschraubt werden kann. Es weist außerdem in ihrer Form speziell angepaßte Aufnahmen 31 auf, die die sichere formschlüssige Halterung eines Steckereinsatzes 34 ermöglichen. Auf diese Weise kann ein vorgefertigter Leitungsstrang mit Steckereinsätzen 34 am Ende einfach in eine noch offene Schutzelementreihe eingelegt und durch Schließen der Deckelsegmente 14 der Endstücke 30 fixiert werden. Es entsteht so eine modular aufgebaute Schutzelementreihe mit fest eingebauten Leitungen, welche mit ihren Endstücken 30 an Anschlußadaptern 36 befestigt werden kann. Ein Verriegelungsmechanismus 32 ermöglicht im Zusammenwirken mit Verriegelungszapfen 37 an den Endstücken 30 eine sichere Befestigung der Schutzelementreihe.

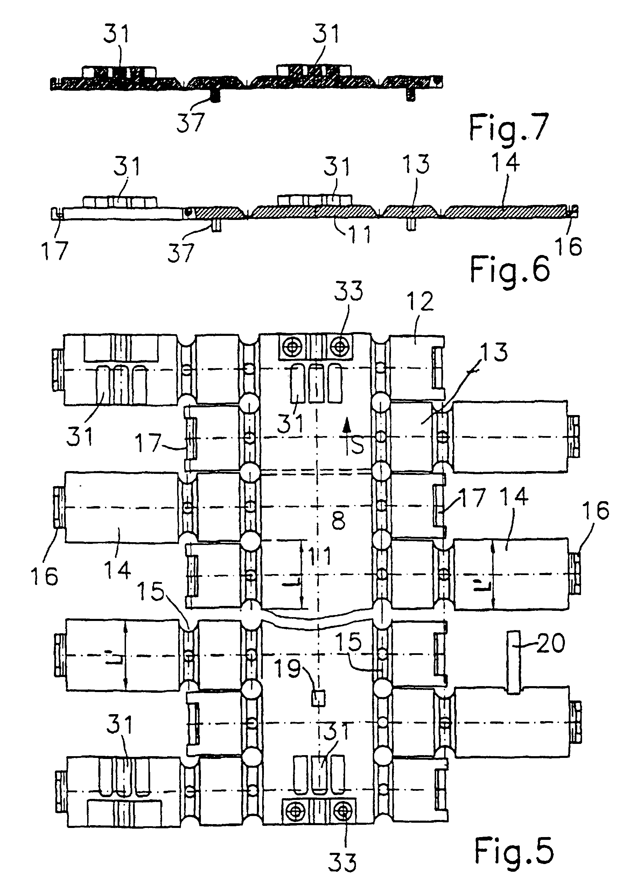

Das Herstellungsprinzip der in Fig. 4 dargestellten Schutzelementreihe wird auch anhand der Figuren 5, 6 und 7 nochmals veranschaulicht. Die Fig. 5 zeigt in einer Ansicht von oben den Aufbau einer solchen Schutzelementreihe in ungefalteter Stellung, wobei die Fig. 6 einen Querschnitt durch das vorletzte Schutzelement und die Fig. 7 einen Querschnitt durch das Endstück der Schutzelementreihe aus Fig. 5 zeigt. Die Bezugszeichen entsprechen denen der vorhergehenden Figuren, so daß die Schutzelementreihe aus Bodensegmenten 11, Wandsegmenten 12, 13 und Deckelsegmenten 14 aufgebaut ist. Die Längsrichtung ist durch einen Pfeil S in Fig. 5 angedeutet. Fig. 5 veranschaulicht, daß die Deckelsegmente 14 abwechselnd an beiden Seiten der ungefalteten Schutzelementreihe angeordnet sind, was einen entscheidenden Vorteil bei der Dimensionierung mit sich bringt. Durch die abwechselnde Anordnung besteht für die Deckelsegmente 14 genügend Platz, daß diese eine Ausdehnung L' in Längsrichtung S haben können, welche größer als die Ausdehnung L der einzelnen Bodensegmente 11 in Längsrichtung S ist. Je nach dem Aufmaß, welches die Länge L' der Deckelsegmente 14 gegenüber der Länge L der Bodensegmente 11 aufweist, kann die Vorspannung der Schutzelementreihe bestimmt werden, d.h. die Kraft, die erforderlich ist, um die Schutzelementreihe in eine exakt gerade Ausrichtung zu bringen, diese Vorspannung bestimmt die erreichbaren freitragenden Längen solcher Schutzelementreihen und erlaubt die Beeinflussung des Durchhangs bei besonders großen freitragenden Längen. Die Vorspannung könnte prinzipiell außer durch die Dimensionierung der Deckelsegmente 14 auch durch eine geeignete Formgebung wechselseitig angeordneter Wandsegmente 12, 13 erreicht werden, indem diese Wandsegmente geringfügig trapezförmig gestaltet werden. Die einfachste und stabilste Ausführungsform ist jedoch durch eine entsprechende Dimensionierung der Deckelsegmente 14 zu erreichen.

Als weitere Besonderheit ist in der Fig. 4 eine zusätzliche Ausgestaltung schematisch dargestellt. Es handelt sich um einen Trennsteg 20, der an einem Deckelsegment 14 angeformt ist und der sich so aus der Ebene seiner Herstellung falten läßt, daß er beim Zusammenfalten der Schutzelemente in eine Trennstegaufnahme 19 eingreift und so sicher befestigt den freien Querschnitt eines Schutzelementes 1 unterteilt. Grundsätzlich könnten bei der Herstellung der Schutzelemente Trennstege auch schon in einer Ausrichtung senkrecht zur Ebene der einzelnen Segmente gespritzt bzw. gegossen werden, wodurch ein zusätzliches Falten in die gewünschte Lage nicht mehr erforderlich wäre.

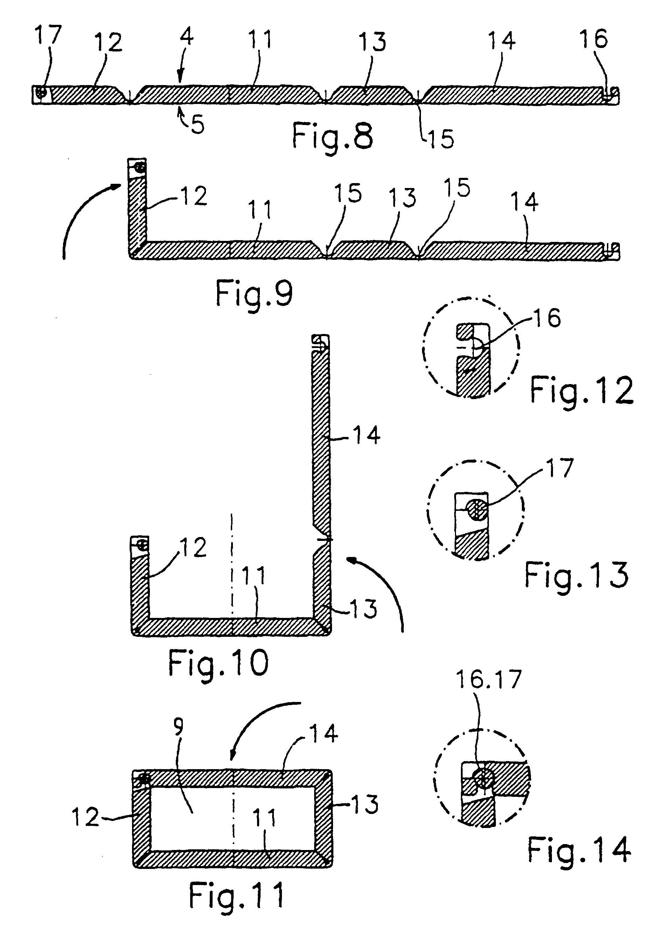

Die Figuren 8, 9, 10, 11, 12, 13 und 14 zeigen nochmals im Detail im Querschnitt ein Schutzelement in seiner Herstellungsebene und in unterschiedlichen Zuständen beim Zusammenfalten. Die einzelnen Teile tragen die gleichen Bezugszeichen wie in den vorangegangenen Figuren.

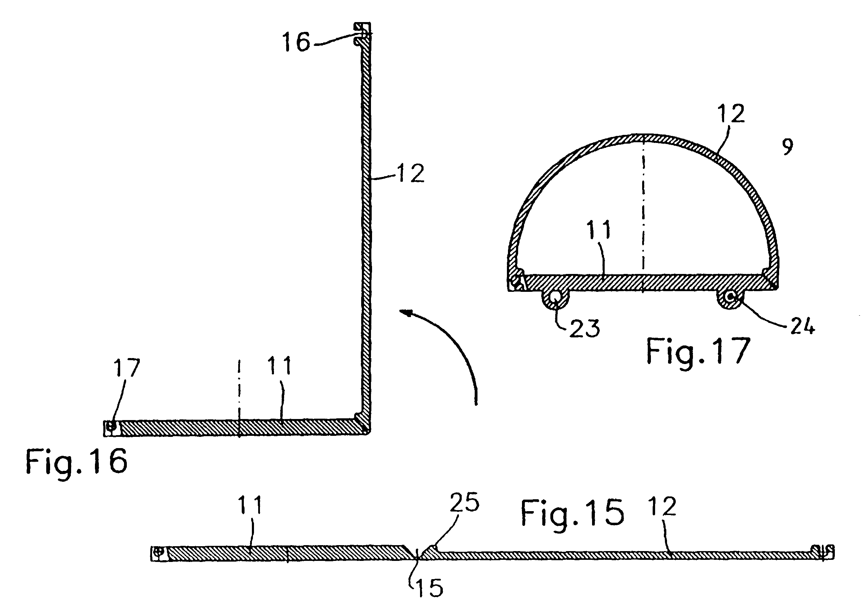

Ein besonders einfach aufgebautes Schutzelement ist im Querschnitt in den Figuren 15, 16 und 17 dargestellt, und zwar im Zustand der Herstellung, in teilweise gefaltetem Zustand und in der geschlossenen Endform. Bei diesem Ausführungsbeispiel weist das Schutzelement nur ein Bodensegment 11 und ein Wandsegment 12 auf, die durch eine verbiegbare Brücke 15 verbunden sind. Ein Formteil 25 bewirkt die richtige Lage beim Zusammenfalten und das biegsame Wandsegment 12 kann in eine Halbkreisform gebracht und mittels eines Schließmechanismus' 16, 17 mit dem Bodensegment 11 zu einer geschlossenen Form verriegelt werden. Bei dieser Art der zumindest teilweise elastischen Verformung des Wandsegmentes 12 ist insbesondere auch ein Einhaken in eine Öffnung im Bodensegment 11 als Schließmechanismus geeignet, wobei der Haken durch die elastische Kraft in einer entsprechenden Öffnung im Bodensegment 11 gehalten sein kann.

Fig. 17 zeigt zusätzlich in schematischer Form Führungsöffnungen 23 an der Unterseite des Bodensegmentes 11 zur Aufnahme von nicht dargestellten Führungsfäden 24. Mittels solcher Führungsöffnungen 23 lassen sich viele Schutzelemente auf Führungsfäden 24 auffädeln, wodurch eine einfache Schutzelementreihe entsteht. Natürlich kann eine solche Schutzelementreihe auch bei dieser Ausführungsform genausogut durch einstückige Herstellung einer Schutzelementreihe wie oben beschrieben hergestellt werden.

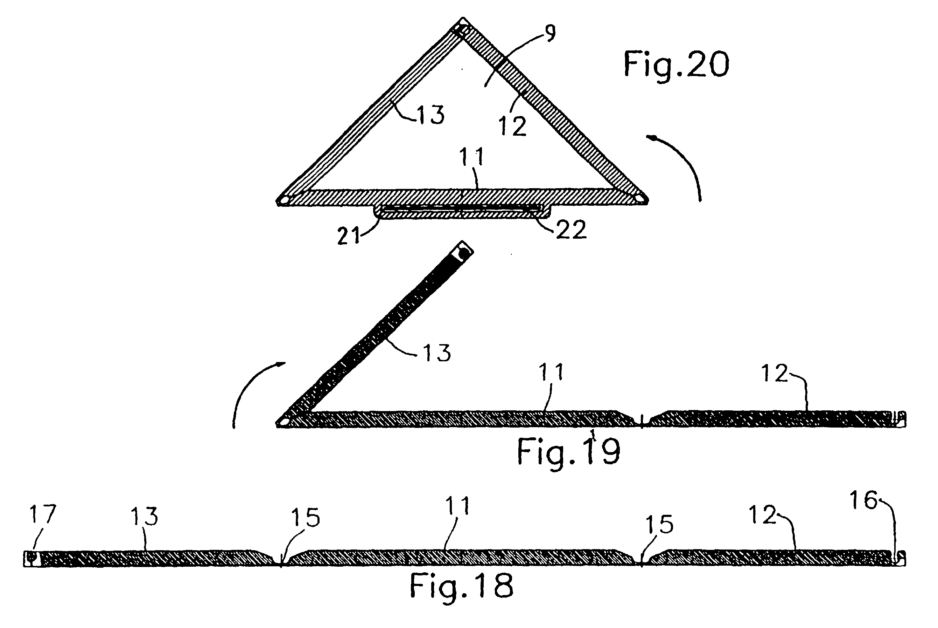

Figuren 18, 19 und 20 zeigen ein weiteres Ausführungsbeispiel der Erfindung im Querschnitt, wiederum in gestreckter, teilweise gefalteter und vollständig gefalteter Form. Bei diesem Ausführungsbeispiel weist jedes Schutzelement ein Bodensegment 11 und zwei Wandsegmente 12, 13 auf, welche im zusammengefalteten Zustand einen dreieckigen Kanalabschnitt 10 bilden. Ein Verriegelungsmechanismus 16, 17 kann wiederum entsprechend den auftretenden Belastungen so gestaltet sein, daß ein unbeabsichtigtes Öffnen unter Belastung nicht möglich ist.

Figur 20 zeigt zusätzlich ein Ausführungsbeispiel für eine Führungsöffnung 21 für ein Führungsband 22. Dadurch ist es, falls eine Schutzelementreihe nicht einstückig hergestellt werden soll, möglich, viele Schutzelemente auf ein Führungsband aufzufädeln. Ein solches Führungsband, kann beispielsweise auch aus Federstahl bestehen, wodurch besondere Eigenschaften der Schutzelementreihe und eine große Haltbarkeit erreichbar ist. Andere Materialien kommen für das Führungsband 22 ebenfalls in Betracht.

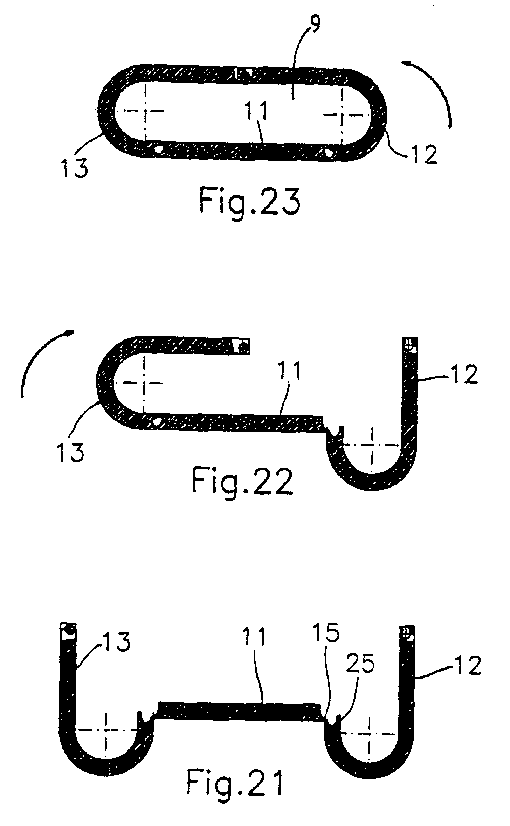

Figuren 21, 22 und 23 zeigen ein weiteres Ausführungsbeispiel der Erfindung im Querschnitt, wiederum in ungefaltetem, teilweise gefaltetem und geschlossenem Zustand. Bei diesem Ausführungsbeispiel sind die Wandsegmente 12 gebogen geformt, so daß sie gleichzeitig die Funktion eines Deckelsegmentes mitübernehmen können. Dieses Ausführungsbeispiel zeigt auch, daß unter einer flächigen, etwa ebenen Konfiguration trotzdem komplexere Formen verstanden werden können, die jedoch hauptsächlich so gestaltet sind, daß sie, von bestimmten Besonderheiten abgesehen, im wesentlichen durch Gußformen aus zwei Halbschalen hergestellt werden können.

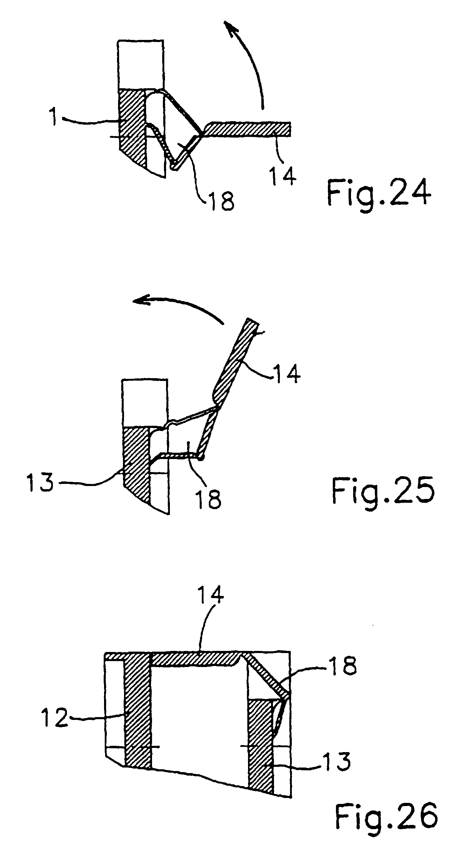

Die Figuren 24, 25 und 26 zeigen eine besondere Ausführungsform, bei der anstelle der verbiegbaren Brücke 15 zwischen zwei Segmenten ein Kniehebelgelenk 18 angeordnet sein kann. Solche Kniehebelgelenke 18 haben die Eigenheit, durch Formgebung und Dimension von zwei oder drei Kunststoffstegen in zwei Stellungen stabil stehen zu können. So kann ein mit einem Kniehebelgelenk 18 an ein Wandsegment 13 angelenktes Deckelsegment 14 stabil in der Stellung wie in Fig. 24 dargestellt stehen. Nach einer gegen einen Widerstand entsprechend der Pfeilrichtung in Fig. 25 durchgeführten Bewegung kann das Deckelsegment 14 dann in einer zweiten Stellung, wie in Fig. 26 dargestellt, stabil einrasten oder unter Federdruck an einer Anlage anliegen. Solche Kniehebelgelenke können grundsätzlich an verschiedenen Stellen anstelle der oben beschriebenen verbiegbaren Brücken 15 eingesetzt werden, insbesondere jedoch für die Anlenkung der Deckelsegmente 14 benutzt werden. Sie sind auch für die Deckel von nicht faltbaren Kettengliedern von Energieführungsketten geeignet.

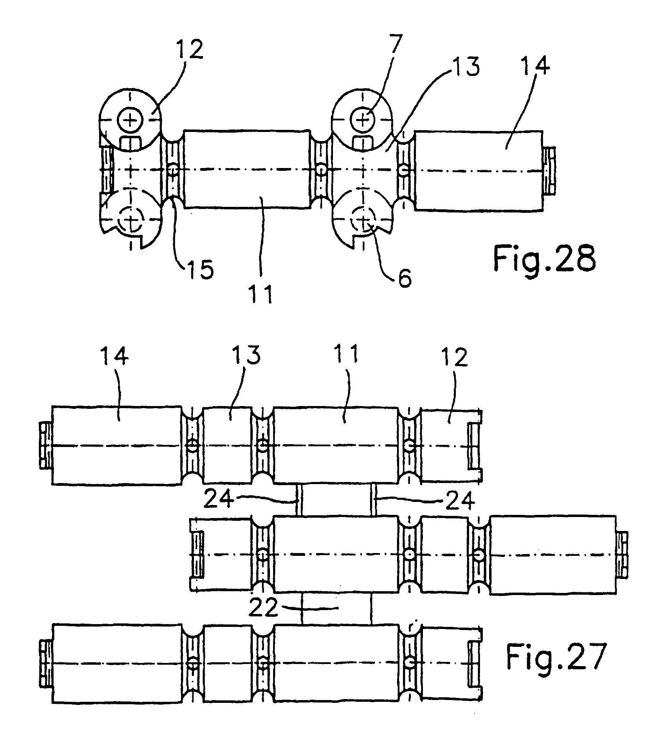

Fig. 27 zeigt in schematischer Darstellung, wie eine Schutzelementreihe aus einzelnen Schutzelementen 11 an ein Führungsband 22 oder an zwei Führungsfäden 24 angespritzt sein kann. Moderne Kunststoffspritzmaschinen lassen es zu, daß ein beliebig langes Führungsband 22 oder Führungsfäden 24 durch die Spritzgußformen geführt werden und jeweils in vorgegebenen Abständen eines oder mehrere Schutzelemente mit ihren Bodensegmenten 11 an diese durchlaufenden Teile angespritzt werden. Dabei können die Materialien von Bodensegmenten 11 und Führungsband 22 bzw. Führungsfäden 24 gleich oder unterschiedlich sein. Auf diese Weise können besonders flexible und haltbare Schutzelementreihen hergestellt werden. Auch diese Herstellung ist prinzipiell mit nicht faltbaren Schutzelementen möglich.

Als letztes Ausführungsbeispiel zeigt die Fig. 28, daß die vorliegende Erfindung auch zur Herstellung von Kettengliedern, wie sie an sich für den Aufbau von Energieführungsketten bekannt sind, geeignet ist. Wie schematisch angedeutet, kann auch ein Energieführungskettenglied durch Falten aus einem Bodensegment 11, einem Wandsegment 12 und einem Wandsegment 13 mit daranhängendem Deckelsegment 14 hergestellt werden. Bis auf die verbiegbaren Brücken 15 braucht sich ein durch Falten hergestelltes Kettenglied nicht von anderen bekannten Bauformen zu unterscheiden, so daß auch alle dort bekannten Verbindungstechniken und Wege zur Begrenzung des Krümmungsradius' eingesetzt werden können. Ein zusätzlicher Freiheitsgrad bei der Gestaltung ergibt sich allerdings dadurch, daß bei der Herstellung in einer im wesentlichen ebenen Form einteilige Kettenglieder hergestellt werden können, die trotzdem an den Innen- und Außenseiten beliebige Strukturen aufweisen können. Dies ist für einstückige oder U-förmige Kettenglieder sonst nur mit extrem komplizierten Spritzguß-Formen möglich. Außerdem ergibt sich als weiterer Vorteil, daß die Gelenke, wie auch immer sie gestaltet sein mögen, nicht zwingend erst im gefalteten Zustand des Kettengliedes zusammengesetzt werden müssen, sondern auch bereits in der noch gestreckten Form ineinandergesetzt werden können. Dies ermöglicht Bauformen, z.B. lange Zapfen 6 in Führungslöchern 7, die sich bei einstückigen Kettengliedern, die bereits in ihrer Endform hergestellt werden, überhaupt nicht zusammenfügen lassen würden.

Die vorliegende Erfindung ermöglicht daher durch das Konzept des gespritzten oder gegossenen faltbaren Schutzelementes zahlreiche kostengünstig herstellbare und technisch vorteilhafte Bauformen von Schutzsystemen für bewegliche und unbewegliche Leitungen, die mit herkömmlichen Verfahren nicht herstellbar waren. Insbesondere lassen sich so kleine, preisgünstige Leitungsführungssysteme in großen Stückzahlen herstellen, was ihre Anwendung in Bereichen möglich macht, in denen bisher solche Systeme nur schwer einsetzbar waren, beispielsweise in kleinen Tischdruckern, bei Manipulatoren und Kleinmaschinen.

### Bezugszeichenliste

- 1: Schutzelement
- 2: Mittel zur Begrenzung des Krümmungsradius, Steg
- 3: abgeschrägte Stirnseite
- 4: Oberseite des Bodensegmentes
- 5: Unterseite des Bodensegmentes
- 6: Einrichtung zum Anlenken (Zapfen)
- 7: Einrichtung zum Anlenken (Führungsloch)
- 8: elastischer Biegebereich
- 9: Kanal
- 10: Kanalabschnitt
- 11: Bodensegment
- 12: Wandsegment
- 13: Wandsegment
- 14: Deckelsegment
- 15: verbiegbare Brücke
- 16, 17: Schließmechanismus
- 18: Kniehebelgelenk
- 19: Trennstegaufnahme
- 20: Trennsteg
- 21: Führungsöffnung für Führungsband
- 22: Führungsband
- 23: Führungsöffnung für Führungsfaden
- 24: Führungsfaden
- 25: Formteil
- 30: Endstück
- 31: Aufnahme für Steckverbindungen
- 32: Verriegelungsmechanismus
- 33: Befestigungslöcher
- 34: Steckereinsatz
- 35: Leitung
- 36: Anschlußadapter
- 37: Verriegelungszapfen
- L: Länge eines Schutzelementes
- L': Länge eines Deckelsegmentes
- R: Krümmungsradius
- S: Längsrichtung

## Patentansprüche

1. Faltbares Schutzelement (1) für, insbesondere beweglich verlegte, Leitungen (35), welches untereinander durch verbiegbare Brücken (15, 18) verbundene Segmente (11, 12, 13, 14) aufweist, die aus Kunststoff im wesentlichen in einer etwa ebenen, flächigen Konfiguration einteilig gespritzt oder gegossen sind, wobei das Schutzelement (1) ein Bodensegment (11) mit einer Oberseite (4) und einer Unterseite (5) und mindestens ein Wandsegment (12) aufweist, welche durch Biegen und/oder Falten Richtung Oberseite (4) des Bodensegmentes (11) und mechanisches Schließen eines Schließmechanismus' (16, 17) zu einem geschlossenen Kanalabschnitt (10 geformt werden können, und wobei das Schutzelement (1) vorzugsweise mit anderen gleichartigen Schutzelementen (1) so verbunden oder verbindbar ist, daß die Kanalabschnitte (10) in einer Längsrichtung (S) einen Kanal (9) für Leitungen (35) bilden.

2. Schutzelement (1) nach Anspruch 1, dadurch gekennzeichnet, daß es mindestens zwei Wandsegmente (12, 13) aufweist.

3. Schutzelement (1) nach Anspruch 1, dadurch gekennzeichnet, daß es mindestens zwei Wandsegmente (12, 13) und ein Deckelsegment (14) aufweist.

4. Schutzelement (1) nach Anspruch 1, 2 oder 3, dadurch gekennzeichnet, daß der Schließmechanismus (16, 17) eine Vorrichtung zum Einrasten, Verhaken und/oder Verriegeln ist, insbesondere eine gegen unbeabsichtigtes Lösen unter Belastung gesicherte Vorrichtung.

5. Schutzelement (1) nach einem der vorhergehenden Ansprüche, dadurch gekennzeichnet, daß die einzelnen Segmente (11, 12, 13, 14) mit Formteilen (25), insbesondere Stegen, Vorsprüngen, Ausnehmungen und dergleichen, versehen sind, die das formgenaue Zusammenfalten sicherstellen.

6. Schutzelement (1) nach einem der vorhergehenden Ansprüche, dadurch gekennzeichnet, daß an mindestens eines der Segmente (14) mindestens ein Trennsteg (20) angeformt ist, der den aus dem Schutzelement (1) zu formenden Kanalabschnitt (10) in zwei Teilquerschnittsflächen unterteilt.

7. Schutzelement (1) nach einem der vorhergehenden Ansprüche, dadurch gekennzeichnet, daß die die Segmente (11, 12, 13, 14) untereinander verbindenden Brücken (15) zumindest teilweise Kniehebelgelenke (18) sind, die in zwei unterschiedlichen Stellungen stabil stehenbleiben.

8. Schutzelement (1) nach einem der vorhergehenden Ansprüche, dadurch gekennzeichnet, daß jedes Schutzelement (1) Einrichtungen zum Anlenken (6, 7) von benachbarten Schutzelementen (1) aufweist, insbesondere Zapfen (6) und Führungslöcher (7) und dergleichen.

9. Schutzelement (1) nach einem der vorhergehenden Ansprüche, dadurch gekennzeichnet, daß es Führungsöffnungen (21; 23) zur Aufnahme mindestens eines Führungsbandes (22) oder Führungsfadens (24) zum Aneinanderreihen vieler Schutzelemente (1) aufweist.

10. Schutzelement (1) nach einem der vorhergehenden Ansprüche, dadurch gekennzeichnet, daß es Mittel (2) aufweist zur Begrenzung des Winkels, um den es in Längsrichtung (R) gegenüber einem benachbarten Schutzelement (1) abgewinkelt werden kann.

11. Schutzelement (1) nach einem der Ansprüche 1 bis 7, dadurch gekennzeichnet, daß das Schutzelement (1) mit benachbarten Schutzelementen (1) einstückig in Form einer Schutzelementreihe hergestellt ist, wobei insbesondere die Bodensegmente (11) aneinanderhängen.

12. Einstückige Schutzelementreihe nach Anspruch 11, dadurch gekennzeichnet, daß die Bodensegmente (11) zusammen eine durchgehende, biegsame Bodenfläche gleichmäßiger Materialdicke bilden.

13. Einstückige Schutzelementreihe nach Anspruch 11, dadurch gekennzeichnet, daß die Bodensegmente (11) durch elastische Biegebereiche (8) miteinander verbunden sind, insbesondere durch Abschnitte mit geringerer Materialdicke und/oder geringerer Breite als der der Bodensegmente (11).

14. Einstückige Schutzelementreihe nach einem der Ansprüche 11 bis 13, dadurch gekennzeichnet, daß jedes Schutzelement (1) Mittel (2) aufweist zur Begrenzung des Winkels, um den es in Längsrichtung gegenüber einem benachbarten Schutzelement (1) abgewinkelt werden kann.

15. Einstückige Schutzelementreihe nach Anspruch 14, dadurch gekennzeichnet, daß an jedem Bodensegment an der Unterseite mindestens ein Steg (2) angeordnet ist, der mit benachbarten Stegen (2) so zusammenwirkt, daß die Schutzelementreihe nur bis zu einem vorgegebenen Mindestkrümmungsradius zur Unterseite hin gebogen werden kann.

16. Einstückige Schutzelementreihe nach Anspruch 15, dadurch gekennzeichnet, daß die Stege (2) in Längsrichtung verlaufen und insbesondere abgeschrägte Stirnseiten (3) aufweisen.

17. Einstückige Schutzelementreihe nach Anspruch 15, dadurch gekennzeichnet, daß die Stege (2) quer zur Längsrichtung verlaufen und insbesondere abgeschrägte Seitenflächen haben.

18. Einstückige Schutzelementreihe nach einem der Ansprüche 11 bis 17, dadurch gekennzeichnet, daß die bei zwei benachbarten Bodensegmenten (11) seitlich anhängenden jeweiligen Wandsegmente (12, 13) und/oder Deckelsegmente (14) abwechselnd an den beiden Seiten angeordnet sind, so daß sich insbesondere Wandsegmente (11, 12) und/oder Deckelsegmente (14) mit solchen Abmessungen (L') herstellen lassen, daß die fertig gefaltete Schutzelementreihe zur Oberseite (4) hin nicht oder jedenfalls nicht ohne Vorspannungskraft gekrümmt werden kann.

19. Einstückige Schutzelementreihe nach einem der Ansprüche 11 bis 18, dadurch gekennzeichnet, daß sie angeformt an mindestens einem Ende ein Endstück (30) aufweist, welches zur Befestigung und/oder zur Aufnahme von Anschlußmitteln (34) für Leitungen dient.

20. Einstückige Schutzelementreihe nach Anspruch 19, dadurch gekennzeichnet, daß das Endstück (30) vorgeformte Aufnahmen (31) für elektrische und/oder pneumatische und/oder hydraulische Steckverbindungen (34) aufweist.

21. Verfahren zur Herstellung einer einstückigen Schutzelementreihe aus Schutzelementen gemäß den Ansprüchen 1 bis 7, dadurch gekennzeichnet, daß an mindestens ein Führungsband (22) oder an zwei oder mehr Führungsfäden (24) in vorgegebenen Abständen Schutzelemente (1) angespritzt oder angegossen werden.

22. Verfahren nach Anspruch 21, dadurch gekennzeichnet, daß bei jedem Spritz- oder Gießvorgang jeweils mehrere Schutzelemente (1) angespritzt bzw. angegossen werden.

23. Verfahren zur Herstellung einer einstückigen Schutzelementreihe gemäß einem der Ansprüche 11 bis 20, dadurch gekennzeichnet, daß in einer einzigen Form in einem einzigen Gieß- oder Spritzvorgang eine Vielzahl zusammenhängender faltbarer Schutzelemente (1) hergestellt wird, die nach der Entnahme aus der Form zu einem flexiblen Kanal für Leitungen gefaltet werden können.

24. Verfahren nach Anspruch 23, dadurch gekennzeichnet, daß in derselben Form bei demselben Gieß- oder Spritzvorgang mindestens ein an die Schutzelementreihe angeformtes Endstück (30) mit hergestellt wird, welches zur Befestigung und/oder zur Aufnahme von Anschlüssen (34) für Leitungen vorbereitet ist.

25. Verfahren zur Herstellung einer Schutzelementreihe mit eingelegten Leitungen und in Endstücke (30) integrierten Anschlüssen (34), dadurch gekennzeichnet,
- daß die Schutzelementreihe gemäß Anspruch 24 hergestellt wird,
- daß vor dem vollständigen Falten der Schutzelementreihe Leitungen mit Anschlußsteckern und/oder Anschlußbuchsen (34) in vorgeformte Aufnahmen (31) in dem mindestens einen Endstück (30) eingelegt und entlang der Schutzelementreihe verlegt werden und
- daß anschließend die Schutzelemente (1) fertig zusammengefaltet, die Endstücke (30) zur Fixierung der Anschlußstecker und/oder Anschlußbuchsen (34) geschlossen und die Kanalabschnitte (10) mittels der Schließmechanismen (16, 17) ebenfalls geschlossen werden.

## Claims

1. A foldable protective element (1) for, preferably movably laid lines (35), which has segments (11, 12, 13, 14) that are interconnected by deformable bridges (15, 18), which segments (11, 12, 13, 14) consisting substantially of a single-piece with an approximately even and flat plastic injected or molded configuration, the protection element (1) comprising a base segment (11) with a top side (4) and a bottom side (5) and at least one wall segment (12), which can be formed into a closed duct section (10) by bending and/or folding in the direction of the top side (4) of the base segment (11) and by mechanical closure of a closing mechanism (16, 17) and the protection element (1) preferably being connected to or is connectable with other similar protection elements (1) in such a way that in a longitudinal direction (S) the duct sections (10) form a duct (9) for lines (35).

2. A protective element (1) according to claim 1 characterized in that it has at least two wall segments (12, 13).

3. A protective element (1) according to claim 1 characterized in that it has at least two wall segments (12, 13) and one cover segment (14).

4. A protective element (1) according to claim 1, 2, or 3 characterized in that the closing mechanism (16, 17) is a device for latching engagement, hooking engagement and/or locking engagement, in particular a device being secured against unintended release under load.

5. A protective element (1) according to one of the preceding claims characterized in that the individual segments (11, 12, 13, 14) are provided with shaped pieces (25), in particular webs, projections, recesses and the like, which ensure the true-in-form folding up.

6. A protective element (1) according to one of the preceding claims characterized in that on at least one of the segments (14) at least one dividing web (20) is formed subdividing into two partial cross-sectional areas the canal portion (10), which is to be formed from the protective element (1).

7. A protective element (1) according to one of the preceding claims characterized in that the bridges (15) interconnecting the segments (11, 12, 13, 14) are at least partially toggle joints (18), which remain stable in two different positions.

8. A protective element (1) according to one of the preceding claims characterized in that each protective element (1) has means for the pivotal connection (6, 7) of adjacent protective elements (1), in particular pins (6) and guide holes (7) and the like.

9. A protective element (1) according to one of the preceding claims characterized in that it has guide openings (21; 23) for receiving at least one guide band (22) or guide thread (24) for stringing many protective elements (1) together.

10. A protective element (1) according to one of the preceding claims characterized in that it has means (2) for limiting the angle through which it can be angled in longitudinal direction (R) relative to an adjacent protective element (1).

11. A protective element (1) according to one of claims 1 through 7 characterized in that the protective element (1) is produced in one piece together with adjacent protective elements (1) in the form of a series of protective elements, wherein in particular the base segments (11) are attached to each other.

12. A one-piece series of protective elements according to claim 11 characterized in that the base segments (11) together form a continuous flexible bottom surface of uniform material thickness.

13. A one-piece series of protective elements according to claim 11 characterized in that the base segments (11) are connected together by resilient flexural regions, in particular by portions of smaller material thickness and/or smaller width than that of the base segments (11).

14. A one-piece series of protective elements according to one of claims 11 through 13 characterized in that each protective element (1) has means (2) for limiting the angle through which it can be angled in longitudinal direction relative to an adjacent protective element (1).

15. A one-piece series of protective elements according to claim 14 characterized in that arranged on each base segment at the underside is at least one web (2) which cooperates with adjacent webs (2) in such a way that the series of protective elements can be bent towards the underside only as far as a predetermined minimum radius of curvature.

16. A one-piece series of protective elements according to claim 15 characterized in that the webs (2) extend in longitudinal direction and in particular have bevelled end faces (3).

17. A one-piece series of protective elements according to claim 15 characterized in that the webs (2) extend transversally relative to the longitudinal direction and in particular have bevelled side surfaces.

18. A one-piece series of protective elements according to one of claims 11 through 17 characterized in that the respective wall segments (12, 13) and/or cover segments (14) which are laterally attached in respect of two adjacent base segments (11) are arranged alternately at the two sides so that in particular wall segments (11, 12) and/or cover segments (14) can be produced of such dimensions (L') that the series of protective elements when in the finished folded condition cannot be curved towards the top side (4) or at any event cannot be curved towards the top side without a prestressing force.

19. A one-piece series of protective elements according to one of claims 11 through 18 characterized in that formed on at least one end it has an end portion (30) which serves for fixing and/or receiving connecting means (34) for lines.

20. A one-piece series of protective elements according to claim 19 characterized in that the end portion (30) has pre-shaped receiving means (31) for electrical and/or pneumatic and/or hydraulic plug connections (34).

21. A method for the production of a one-piece series of protective elements comprising protective elements according to claims 1 through 7 characterized in that protective elements (1) are injection-moulded or cast onto at least one guide band (22) or onto two or more guide threads (24) at a predetermined distance.

22. A method according to claim 21 characterized in that a respective plurality of protective elements (1) is injection-molded and casted respectively in each injection or casting operation.

23. Method for the production of a one-piece series of protective elements according to one of claims 11 through 20 characterized in that a plurality of interconnected foldable protective elements (1) is produced in a single mould in a single casting or injection-moulding operation, which protective elements after removal from the mould can be folded to form a flexible duct for lines

24. Method according to claim 23 characterized in that at least one end portion (30) which is formed on the series of protective elements is also produced in the same mould in the same casting or injection molding operation, which end portion is prepared for fixing and/or for receiving connections (34) for lines.

25. Method for the production of a series of protective elements with lines laid therein and connections (34) integrated into end portions (30) characterized in that
- the series of protective elements is produced according to claim 24,
- prior to complete folding of the series of protective elements lines with connecting plugs and/or connecting sockets (34) are fitted into pre-shaped receiving means (31) in the at least one end portion (30) and laid along the series of protective elements, and
- then the protective elements (1) are folded together into the finished condition, the end portions (30) are closed for fixing the connecting plugs and/or connecting sockets (34) and the passage portions (10) are also closed by means of the closing mechanisms (16, 17).

## Revendications

1. Elément pliable de protection (1) pour notamment des lignes (35) disposées de façon mobile, qui présente des segments (11, 12, 13, 14) reliés entre-eux par des ponts (15, 18), les segments étant extrudés ou coulés sensiblement en une pièce en une configuration à peu près plate et plane à partir de matière plastique, l'élément de protection (1) présentant un segment de base (11) avec une face supérieure (4) et une face inférieure (5) et au moins un segment de paroi (12) qui par courbement et/ou par pliage en direction de la face supérieure (4) du segment de base (11) et par fermeture mécanique d'un mécanisme de fermeture (16, 17) peuvent être formés en une section de canal (10) fermée et l'élément de protection (1) étant de préférence relié ou pouvant être relié à d'autres éléments de protection (1) semblables de telle façon que les sections de canal (10) forment en une direction longitudinale (S) un canal (9) pour des lignes (35).

2. Elément de protection (1) selon la revendication 1, caractérisé en ce qu'il présente au moins deux segments de parois (12, 13).

3. Elément de protection (1) selon la revendication 1, caractérisé en ce qu'il présente au moins deux segments de parois (12, 13) et un segment de couverture (14).

4. Elément de protection (1) selon la revendication 1, 2 ou 3, caractérisé en ce que le mécanisme de fermeture (16, 17) est un dispositif d'enclenchement, d'accrochage et/ou de verrouillage, notamment un dispositif étant protégé contre un détachement non intentionné.

5. Elément de protection (1) selon l'une des revendication précédentes, caractérisé en ce que les segments individuels (11, 12, 13, 14) sont pourvus de pièces usinées (25), notamment d'entretoises, de saillies, d'évidements et semblables, qui assurent le pliage en reproduction exacte.

6. Elément de protection (1) selon l'une des revendications précédentes, caractérisé en ce que sur au moins un des segments (14) au moins une entretoise de séparation (20) est formée qui subdivise en deux superficies partielles de section la section de canal (10) devant être formée à partir de l'élément de protection (1).

7. Elément de protection (1) selon l'une des revendications précédentes, caractérisé en ce que les ponts (15) reliant entre-eux les segments (11, 12, 13, 14) sont au moins partiellement des articulations de genouillère (18) qui restent stables en deux différentes positions.

8. Elément de protection (1) selon l'une des revendications précédentes, caractérisé en ce que chaque élément de protection (1) a des moyens pour l'articulation (6, 7) d'éléments de protection (1) adjacents, notamment des pivots (6) et des trous de guidage (7) et semblables.

9. Elément de protection (1) selon l'une des revendications précédentes, caractérisé en ce qu'il présente des orifices de guidage (21; 23) pour recevoir au moins un ruban de guidage (22) ou d'un fil de guidage (24) pour la mise à la file de beaucoup d'éléments de protection (1).

10. Elément de protection (1) selon l'une des revendications précédentes, caractérisé en ce qu'il présente des moyens (2) pour limiter l'angle par lequel il peut être déplacé de façon angulaire en direction longitudinale (R) par rapport à un élément de protection adjacent (1).

11. Elément de protection (1) selon l'une des revendications 1 à 7, caractérisé en ce que l'élément de protection (1) est réalisé d'un seul tenant avec des éléments de protection adjacents en forme d'une série d'éléments de protection, les segments de base (11) étant notamment attachés les uns aux autres.

12. Série d'éléments de protection d'un seul tenant selon la revendication 11, caractérisée en ce que les segments de base (11) forment ensemble une surface de base flexible d'épaisseur uniforme de matériau.

13. Série d'éléments de protection d'un seul tenant selon la revendication 11, caractérisée en ce que les segments de base (11) sont reliés entre-eux par des zones élastiques de flexion (8), notamment par des sections d'épaisseur de matériau moins élevée et/ou de largeur moins élevée que celle des segments de base (11).

14. Série d'éléments de protection d'un seul tenant selon l'une des revendications 11 à 13, caractérisée en ce que chaque élément de protection (1) présente des moyens (2) pour limiter l'angle par lequel il peut être déplacé de façon angulaire par rapport à un élément de protection adjacent (1).

15. Série d'éléments de protection d'un seul tenant selon la revendication 14, caractérisée en ce que sur chaque segment de base au niveau de la face inférieure au moins une entretoise (2) est agencée qui coopère avec les entretoises adjacentes (2) de telle façon que la série d'éléments de protection ne peut être courbée vers la face inférieure que jusqu'à un rayon de courbure minimum prédéterminé.

16. Série d'éléments de protection d'un seul tenant selon la revendication 15, caractérisée en ce que les entretoises (2) s'étendent en direction longitudinale et présentent notamment des faces frontales (3) biseautées.

17. Série d'éléments de protection d'un seul tenant selon la revendication 15, caractérisée en ce que les entretoises (2) s'étendent transversalement à la direction longitudinale et ont notamment des surfaces latérales.

18. Série d'éléments de protection d'un seul tenant selon l'une des revendications 11 à 17, caractérisée en ce que les segments de parois (12, 13) et/ou les segments de couverture (14) respectifs qui sont attachés latéralement à deux segments de base (11) adjacents sont agencés de façon alternée au niveau des deux cotés, de sorte que notamment des segments de parois (11, 12) et/ou des segments de couverture (14) puissent être fabriqués avec de telles dimensions (L') que la série d'éléments de protection pliée finie ne peut pas être courbée vers la face supérieure (4) ou en tout cas pas sans force de précontrainte.

19. Série d'éléments de protection d'un seul tenant selon l'une des revendications 11 à 18, caractérisée en ce que formée au niveau d'au moins une extrémité elle présente une pièce d'extrémité (30) qui sert à la fixation et/ou au logement de moyens de raccord (34) pour des lignes.

20. Série d'éléments de protection d'un seul tenant selon la revendication 19, caractérisée en ce que la pièce d'extrémité (30) présente des logements préformés(31) pour des connexions à fiches électriques et/ou pneumatiques et/ou hydrauliques (34).

21. Procédé destiné à la fabrication d'une série d'éléments de protection d'un seul tenant à partir d'éléments de protection selon les revendications 1 à 7, caractérisé en ce que au niveau au moins d'un ruban de guidage (22) ou au niveau de deux ou plus de fils de guidage (24) des éléments de protection (1) sont coulés par injection ou joints par la fonte.

22. Procédé selon la revendication 21, caractérisé en ce que lors de chaque processus d'injection ou de fonte respectivement plusieurs éléments de protection (1) sont coulés par injection respectivement joints par fonte.

23. Procédé destiné à la fabrication d'une série d'éléments de protection d'un seul tenant selon l'une des revendications 11 à 20, caractérisé en ce que dans un seul moule lors d'un seul processus de fonte ou d'injection une multiplicité d'éléments de protection (1) pliables attachés les uns aux autres est fabriquée qui, après les avoir retirés du moule, peuvent être pliés en un canal flexible pour des lignes.

24. Procédé selon la revendication 23, caractérisé en ce que dans le même moule lors du même processus de fonte ou d'injection au moins une pièce d'extrémité (30) formée sur la série d'éléments de protection est fabriquée qui est préparée à la fixation et/ou au logement de raccords (34) pour des lignes.

25. Procédé destiné à la fabrication d'une série d'éléments de protection avec des lignes y étant disposées et avec des raccords (34) intégrés dans des pièces d'extrémité (30), caractérisé en ce
- que la série d'éléments de protection est fabriquée selon la revendication 24,
- qu'avant le pliage complet de la série d'éléments de protection des lignes avec des fiches de raccordement et/ou avec des broches de raccordement (34) sont disposées dans des logements préformés (31) dans la au moins une pièce d'extrémité (30) et sont disposées le long de la série d'éléments de protection et
- qu'ensuite les éléments de protection (1) sont pliés finis, les pièces d'extrémité (30) fermées pour la fixation des fiches de raccordement et/ou des broches de raccordement (34) et les sections de canal (10) également fermées au moyen des mécanismes de fermeture (16, 17).
